# EUROPÄISCHE PATENTSCHRIFT

(11) **EP 1 147 926 B1**
(45) Veröffentlichungstag und Bekanntmachung des Hinweises auf die Patenterteilung: **28.07.2004**
(21) Anmeldenummer: 01108144.5
(22) Anmeldetag: 30.03.2001
(51) Int. Cl.: B60C 27/10, B60C 27/06, F16G 15/04, B60C 27/14

(54) **Verkürzungselement für eine Reifenkette**
Shortening element for tyre chains
Maillon de raccoursissement de chaînes de neiges

(30) Priorität: 20.04.2000 DE 10019802
(43) Veröffentlichungstag der Anmeldung: 24.10.2001
(73) Patentinhaber: Oberland Schneekettenfabrik Anton Mangold, 82467 Garmisch-Partenkirchen (DE)
(72) Erfinder: Mangold, Christian, 82467 Garmisch- Partenkirchen (DE)
(74) Vertreter: Lang, Friedrich

(56) Entgegenhaltungen:
- EP-A- 0 911 189
- EP-A- 0 913 275
- DE-A- 1 910 077

## Beschreibung

Die vorliegende Erfindung betrifft eine Seitenkette für eine Reifenkette mit einem im Wesentlichen C-förmigen Verkürzungselement nach dem Oberbegriff des Anspruches 1.

Ein gattungsgemäßes Verkürzungselement ist beispielsweise aus der DE 197 48 940 C1 bekannt. Dieses bekannte Verkürzungselement ist einseitig und drehbar in einem ersten Kettenglied gehalten. In unverkürztem Zustand der zugehörigen Reifenkette ist ein zweites Kettenglied in einem freien Ende des Verkürzungselements eingehängt. Zum Verkürzen der Reifenkette wird das Verkürzungselement bei eingehängtem zweiten Kettenglied um 180° gedreht. Das freie Ende des Verkürzungselements wird in einem weiteren Kettenglied eingehängt, welches Teil desjenigen Kettenstrangs ist, dessen Ende durch das erste Kettenglied gebildet ist.

Ein erster Nachteil dieses bekannten Verkürzungselements besteht darin, dass ein Verkürzen der Kette nur in einem einzigen vorgegebenen Maß möglich ist, nämlich um die Länge des inneren lichten Abstands zwischen den beiden Enden des Verkürzungselements. Ein weiterer Nachteil ergibt sich aus der Handhabung des Verkürzungselements beim Vorgang des Verkürzens der zugehörigen Reifenkette: Wie bereits erläutert, wird zu diesem Zweck das Verkürzungselement um 180° gedreht. Sein freies Ende wird in einem weiteren Kettenglied eingehängt. Wie aus der Zeichnung der oben genannten DE 197 48 940 C1 ersichtlich (siehe insbesondere Figur 4), umschlingt dieses freie Ende des Verkürzungselements, wenn es in das weitere Kettenglied eingehängt ist, das weitere Kettenglied so weit, das es das weitere Kettenglied fast über dessen halbe Länge hin umschlingt, mindestens jedoch im Bereich der Rundung an seinem Ende. Dies bedingt nun beim Vorgang des Verkürzens, dass die Reifenkette zusätzlich zu dem Betrag, um den sie gekürzt werden soll, während des Verkürzungsvorgangs temporär um einen weiteren Betrag gekürzt werden muss, der gleich ist dem Betrag der vorstehend genannten Umschlingung. entspricht. Nach dem erfolgten Verkürzen sitzt nun die Reifenkette, da dieser weitere Betrag dann wieder entfällt, genau um diesen weiteren Betrag "zu locker" auf dem Reifen, auf den die Reifenkette beispielsweise montiert ist.

Außerdem ist aus DE 1910077 A ein δ-förmiger Spannhaken für ein Kettenspannschloss bekannt, welcher an einem Langglied drehbar gelagert ist und einen, sich etwa bogenförmig um den Drehpunkt erstreckenden Einführschlitz zum Einhängen eines Endes des Kettenstranges aufweist. Die Stützfläche für das Kettenglied gestaltet sich hier im Wesentlichen in Form einer Rastmulde.

EP 0913275 A2 beschreibt ferner einen C-förmigen Verschlusshaken, wobei das freie hakenförmige Ende und der die beiden Enden des Verschlusshakens verbindende Schenkel einen Einführspalt begrenzen, dessen Weite w nur wenig größer als die Nenndicke des an dem hakenförmige Ende einzuhängenden Kettengliedes ist. Im Bereich der Stützfläche des freien hakenförmige Endes ist nur die Aufnahme eines einzigen Kettengliedes vorgesehen.

Aufgabe der vorliegenden Erfindung ist es deshalb, eine gattungsgemäße Seitenkette für eine Reifenkette so weiterzubilden, dass sie einerseits mindestens eine einzige Verkürzungsmöglichkeit bietet und dass andererseits der Betrag, um den die Reifenkette nach erfolgtem Verkürzen aufgrund des Verkürzungsvorgangs zu locker auf dem Reifen sitzt, möglichst gering ist.

Diese Aufgabe wird durch die kennzeichnenden Merkmale des Anspruches 1 gelöst.

Diese Lösung hat nicht nur den Vorteil, die oben genannten Nachteile zu überwinden, sondern sie hat darüber hinaus noch den Vorteil, dass bei geeigneter Auslegung der Dimensionierung des Verkürzungselements, was noch beschrieben wird, ein Verkürzen der Reifenkette auf mehrere verkürzte Längen erfolgen kann.

Die Erfindung wird nachstehend anhand der Zeichnung näher erläutert. Dabei zeigen:
- Figur 1: das erfindungsgemäße Verkürzungselement als solches,
- Figur 2: das erfindungsgemäße Verkürzungselement, eingehängt in eine Reifenkette, ohne diese zu verkürzen,
- Figur 3: das erfindungsgemäße Verkürzungselement, eingehängt in eine Reifenkette unter Verkürzung derselben.

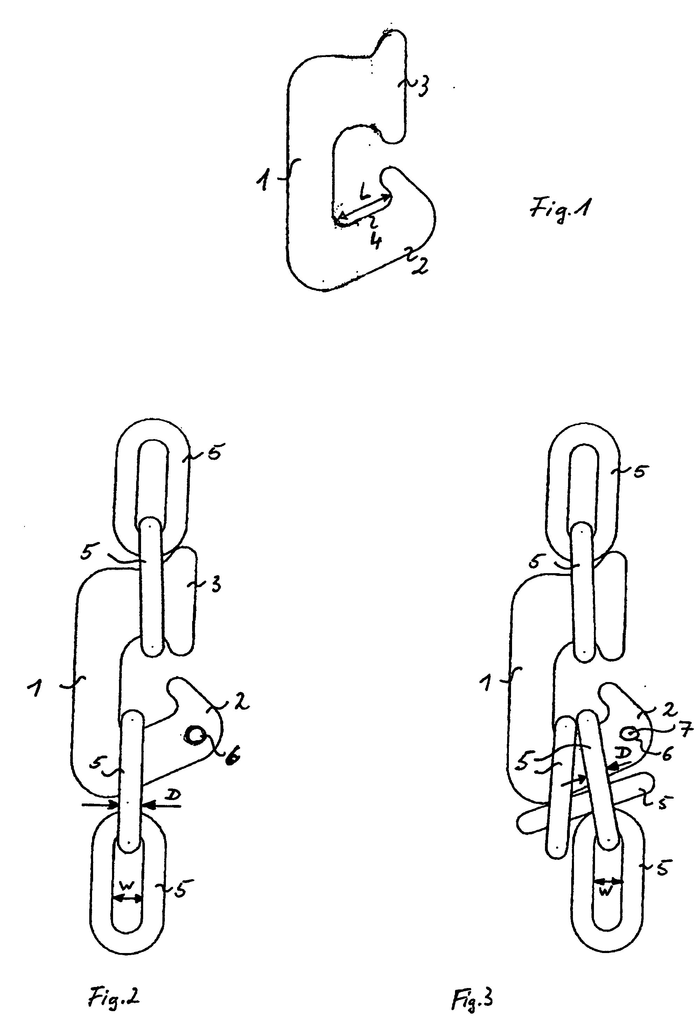

Figur 1 zeigt das Verkürzungselement als solches. Es besteht aus einem flachen, im Wesentlichen C-förmig ausgebildeten Grundkörper 1 mit zwei Enden 2 und 3, die sich gegenüberliegen. Das eine Ende 2 ist im Wesentlichen hakenförmig ausgebildet. Das andere Ende 3 kann beliebig ausgebildet sein, z.B. entweder so, wie in Figur 1 dargestellt, oder aber auch, wie in der Zeichnung zur bereits genannten DE 197 48 940 C1 dargestellt. Wichtig ist dabei nur, dass ein an diesem anderen Ende 3 eingehängtes Kettenglied 5 nicht aus dem Verkürzungselement hinausrutschen kann. Das eine, hakenförmig ausgebildete Ende 2 des Verkürzungselements weist auf seiner im inneren Bereich des Verkürzungselements zugewandten Oberfläche eine Stützfläche 4 auf. Diese kann entweder flach sein oder aber abgerundet bis rundlich (im Querschnitt des Verkürzungselements betrachtet), um sich an das/die einzuhängende(n) Kettenglied(er) in etwa anpassen zu können. Die Länge L dieser Stützfläche 4 beträgt mindestens das zweifache der Dicke D des Materials der Kettenglieder 5 der Kette (dargestellt in den Figuren 2 und 3).

Figur 2 zeigt das erfindungsgemäße Verkürzungselement, verknüpft mit Kettengliedern 5 einer Reifenkette oder einer Seitenkette, d. h., eines seitlichen Strangs einer Reifenkette. Die Reifenkette ist dabei nicht verkürzt. Wie deutlich ersichtlich, ist das letzte Kettenglied 5 eines Kettenstrangs am anderen Ende 3 des Verkürzungselements eingehängt in einer Art, dass dieses letzte Kettenglied 5 nicht vom anderen Ende 3 abrutschen kann. Am einen Ende 2 des Verkürzungselements ist das letzte Kettenglied 5 eines anderen Kettenstrangs der Reifenkette eingehängt. Dies stellt den Zustand dar, bei dem die Reifen- oder Seitenkette nicht verkürzt ist.

Bei Figur 3 hingegen, bei der am anderen Ende 3 des Verkürzungselements wiederum das letzte Kettenglied 5 des einen Kettenstrangs eingehängt ist, wie vorstehend beschrieben, sind am anderen Ende 2 des Verkürzungselements sowohl das letzte Kettenglied 5 des anderen Kettenstrangs wie auch dessen drittletztes Kettenglied 5 eingehängt. Die Reifenkette ist somit in ihrer wirksamen Länge um zwei Kettenglieder 5 verkürzt. Dies ist dadurch möglich, dass die Stützfläche 4 eine Länge L aufweist (ggf. zusätzlich einer gewissen Toleranzlänge, die ein leichtes Einhängen der Kettenglieder 5 erlaubt), die (mindestens) das Einhängen von zwei Kettengliedern 5 nebeneinander erlaubt.

Zwar wäre es rein theoretisch vorstellbar, die Länge L der Stützfläche 4 so zu bemessen, dass sie im Wesentlichen gleich ist der Dicke D des Materials der Kettenglieder 5 und dass man zum Verkürzen der Kette dann lediglich das drittletzte Kettenglied 5 einhängt, nicht jedoch das letzte Kettenglied 5. Allerdings hätte diese Lösung den Nachteil (was umgekehrt bei einer Dimensionierung der Länge L entsprechend der Lehre der vorliegenden Erfindung ein Vorteil des erfindungsgemäßen Verkürzungselements ist), dass dann ein dadurch entstehendes freies Ende des anderen Kettenstrangs frei beweglich ist, baumeln kann und somit im Betrieb gegen den Reifen, auf den die Reifenkette aufgezogen ist, oder gegen dessen Felge oder Radkappe schlagen kann und somit diese beschädigen kann. Solche Beschädigungen sind also beim erfindungsgemäßen Verkürzungselement ausgeschlossen, da sich das vorletzte Kettenglied 5, wie aus Figur 3 ersichtlich, außen an das hakenförmige Ende 2 des Verkürzungselements anlegt und dort vom Verkürzungselement und einem viertletzten Kettenglied 5 des anderen Kettenstrangs festgehalten wird.

Wenn nun die Länge L der Stützfläche 4 so bemessen wird, dass sie das 3-, 4-, 5-fache usw. der Dicke D des Materials der Kettenglieder 5 beträgt, dann lassen sich auch 3, 4, 5 usw. Kettenglieder einhängen zum Verkürzen der Reifenkette, wobei jedes Mal der vorstehend genannte Vorteil gewahrt bleibt, d. h., für die gewünschte, verkürzte Länge des Kettenstrangs gibt es kein freies Ende, das lose baumeln kann, wodurch die genannten Beschädigungen vermieden werden.

Ein weiterer Vorteil des erfindungsgemäßen Verkürzungselements gegenüber dem vorbekannten Verkürzungselement besteht darin, dass bei geeigneter Auslegung der Länge L der Stützfläche 4 des erfindungsgemäßen Verkürzungselements ein Verkürzen um jedes beliebige gewünschte Kettenglied ab dem drittletzten Kettenglied 5 möglich ist, während bei dem vorbekannten Verkürzungselement ein solches Verkürzen nur jeweils um zwei oder ein Vielfaches von zwei Kettenglieddern möglich ist, da das vorbekannte Verkürzungselement beim Verkürzen nur jeweils in ein solches Kettenglied eingehängt werden kann, welches senkrecht zum Verkürzungselement orientiert ist. Dies ist bekanntlich nur bei jedem zweiten Kettenglied der Fall.

In Weiterbildung des erfindungsgemäßen Verkürzungselements weist dieses, wie aus den Figuren 2 und 3 ersichtlich ist, einen Durchbruch (6) auf im Bereich des einen Endes 2. Der Durchbruch 6 kann zum Beispiel durch Bohren oder Stanzen erzeugt sein. Der Durchbruch 6 dient der Aufnahme eines Arretierungselements 7, welches in Figur 3 angedeutet ist. Das Arretierungselement 7 soll ein Herausrutschen der auf der Stützfläche 4 aufliegenden Kettenglieder 5 verhindern. Das Arretierungselement 7 kann entweder aus elastischem Material sein mit vorzugsweise einer Länge, die nur geringfügig größer ist als eine lichte Weite W der Kettenglieder 5. Damit lassen sich die Kettenglieder 5 unter gewissem Kraftaufwand über das Arretierungselement 7 hinwegschieben zum Verkürzen bzw. wiederum Verlängern der Reifenkette. Das Arretierungselement 7 kann aber auch in sich mechanisch starr sein. In diesem Fall ist es vorteilhaft, wenn es eine Länge aufweist, die mindestens das 1½ -fache der lichten Weite W der Kettenglieder 5 beträgt. Zum Verkürzen der Reifenkette bzw. zum wiederum Verlängern der Reifenkette, d. h. Aufheben der Verkürzung, muss in diesem Fall allerdings das Arretierungselement 7 aus dem Durchbruch 6 entfernt werden, damit die Kettenglieder 5 in das Verkürzungselement eingehängt werden können bzw. aus diesem wieder entfernt werden können. Nach beendetem Vorgang ist das Arretierungselement 7 wieder in den Durchbruch 6 einzusetzen.

## Patentansprüche

1. Seitenkette für eine Reifenkette mit einem im Wesentlichen C-förmigen Verkürzungselement (1), bei dem ein Ende (2) des Verkürzungselementes (1) hakenförmig ist, und das andere Ende (3) mit einem Kettenglied (5) eines Kettenstranges der Seitenkette verbunden ist, und
wobei das Verkünzungselement (1) eine Stützfläche (4) zur Aufnahme eines Kettengliedes (5) eines anderen zu Verkürzenden Kettenstranges der Seitenkette aufweist,
**dadurch gekennzeichnet,**
**dass** die Stützfläche (4) am hakenförmigen Ende (2) ausgebildet ist, dass die Stützfläche (4) eine Länge (L) aufweist, die wenigstens das zweifache der Dicke (D) des Materials der Kettenglieder (5) beträgt, und dass im verkürzten Zustand mindestens zwei Kettenglieder (5) des anderen Kettenstranges auf die Stützfläche (4) des Endes (2) des Verkürzungselementes (1) eingehängt sind.

2. Seitenkette nach Anspruch 1,
**dadurch gekennzeichnet,**
**dass** das eine Ende (2) einen Durchbruch (6) aufweist zur Aufnahme eines Arretierungselements (7).

3. Seitenkette nach Anspruch 2,
**dadurch gekennzeichnet,**
**dass** das Arretierungselement (7) elastisch ist.

4. Seitenkette nach Anspruch 3,
**dadurch gekennzeichnet,**
**dass** das Arretierungselement (7) eine Länge aufweist, die geringfügig größer ist als die lichte Weite (W) der Kettenglieder (5).

5. Seitenkette nach Anspruch 2,
**dadurch gekennzeichnet,**
**dass** das Arretierungselement (7) in sich mechanisch starr ist.

6. Seitenkette nach Anspruch 5,
**dadurch gekennzeichnet,**
**dass** das Arretierungselement (7) eine Länge aufweist, die mindestens das 1 ½ -fache der lichten Weite (W) der Kettenglieder (5) beträgt.

7. Seitenkette nach einem der vorhergehenden Ansprüche,
**dadurch gekennzeichnet,**
**dass** die Stützfläche (4) eine Länge (L) aufweist, die wenigstens das 3-fache der Dicke (D) des Materials der Kettenglieder (5) beträgt.

## Claims

1. Lateral chain for a tire chain with an essentially C-shaped shortening element (1), in which one end (2) of the shortening element (1) is hook-shaped and the other end (3) is connected with a chain link (5) of a chain strand of the lateral chain; and in which the shortening element (1) has a supporting surface (4) for receiving the chain link (5) of another, abridgable chain strand of the lateral chain,
**characterized in that**
the supporting surface (4) is disposed at the hook-shaped end (2),
the supporting surface (4) has a length (L), which amounts to at least twice the thickness (D) of the material of the chain links (5), and
in the abridged condition at least two chain links (5) of the other chain strand are hooked onto the supporting surface (4) of end (2) of the shortening element (1).

2. Lateral chain according to claim 1,
**characterized in that**
the one end (2) has a breakout (6) for accommodating a latching element (7).

3. Lateral chain according to claim 2,
**characterized in that**
the latching element (7) is elastic.

4. Lateral chain according to claim 3,
**characterized in that**
the latching element (7) has a length, which is slightly greater than the inner width (W) of the chain links (5).

5. Lateral chain according to claim 2,
**characterized in that**
the latching element (7) is rigid.

6. Lateral chain according to claim 5,
**characterized in that**
the latching element (7) has a length, which amounts to at least one and a half times the inner width (W) of the chain links (5).

7. Lateral chain according to one of the previous claims,
**characterized in that**
the supporting surface (4) has a length (L), which amounts to at least thrice the thickness (D) of the material of the chain links (5).

## Revendications

1. Chaîne latérale pour une chaîne de roue, avec un élément de raccourcissement (1) pour l'essentiel en forme de C, dans laquelle une extrémité (2) de l'élément de raccourcissement (1) est en forme de crochet et l'autre extrémité (3) est reliée à un maillon (5) d'un brin de la chaîne latérale, et dans laquelle l'élément de raccourcissement (1) présente une surface d'appui (4) pour recevoir un maillon (5) d'un autre brin de la chaîne latérale devant être raccourci, ***caractérisée en ce que*** la surface d'appui (4) est formée sur l'extrémité (2) en forme de crochet, ***en ce que*** la surface d'appui (4) présente une longueur (L) qui vaut au moins le double de l'épaisseur (D) du matériau des maillons (5), ***et en ce qu'****à* l'état raccourci, au moins deux maillons (5) de l'autre brin de chaîne sont accrochés sur la surface d'appui (4) de l'extrémité (2) de l'élément de raccourcissement (1).

2. Chaîne latérale selon la revendication 1, ***caractérisée en ce que*** la première extrémité (2) présente un passage (6) destiné à recevoir un élément d'arrêt (7).

3. Chaîne latérale selon la revendication 2, ***caractérisée en ce que*** l'élément d'arrêt (7) est élastique.

4. Chaîne latérale selon la revendication 3, ***caractérisée en ce que*** l'élément d'arrêt (7) présente une longueur qui est légèrement plus grande que la largeur libre (W) des maillons (5).

5. Chaîne latérale selon la revendication 2, ***caractérisée en ce que*** l'élément d'arrêt (7) est mécaniquement rigide.

6. Chaîne latérale selon la revendication 5, ***caractérisée en ce que*** l'élément d'arrêt (7) présente une longueur qui vaut au moins une fois et demi la largeur libre (W) des maillons (5).

7. Chaîne latérale selon l'une quelconque des revendications précédentes, ***caractérisée en ce que*** la surface d'appui (4) présente une longueur (L) qui vaut au moins le triple de l'épaisseur (D) du matériau des maillons (5).
